# FASCICULE DE BREVET EUROPEEN

(11) **EP 3 832 573 B1**
(45) Date de publication et mention de la délivrance du brevet: **28.01.2026**
(21) Numéro de dépôt: 20211644.8
(22) Date de dépôt: 03.12.2020
(51) Int. Cl.: G06Q 20/20, G07F 5/24, G07G 1/00, G07G 1/06, G07G 1/14, G07D 11/26, G07F 19/00, G07D 7/2033

(54) **SYSTEME ET PROCEDE POUR MAINTENIR UNE CONTINUTE D'UN SERVICE D'ENCAISSEMENT**
SYSTEM UND VERFAHREN ZUR AUFRECHTERHALTUNG DER KONTINUITÄT EINES SAMMELDIENSTES
SYSTEM AND METHOD FOR MAINTAINING CONTINUITY OF A COLLECTION SERVICE

(30) Priorité: 03.12.2019 FR 1913693
(43) Date de publication de la demande: 09.06.2021
(73) Titulaire: Cashmag, 83390 Cuers (FR)
(72) Inventeur: GERVAIS, Philippe, 83390 CUERS (FR); VARTANIAN, Stéphane, 83210 SOLLIES TOUCAS (FR)
(74) Mandataire: Brun, Philippe Alexandre Georges

(56) Documents cités:
- EP-A1- 2 736 022
- EP-A1- 3 196 852
- EP-A1- 3 416 142
- EP-A2- 1 580 704
- JP-A- 2003 308 556
- US-A1- 2003 101 257
- US-A1- 2009 101 723
- US-A1- 2010 094 458
- US-A1- 2018 144 320
- US-A1- 2018 240 311

## Description

L'invention concerne le domaine des encaissements en numéraire, c'est-à-dire en billets de banque et/ou en pièces de monnaie, auprès d'un système d'encaissement comportant une caisse enregistreuse électronique associée à un ou plusieurs périphériques d'encaissement tels qu'un ou plusieurs monnayeurs par exemple.

Plus précisément, l'invention vise à offrir une continuité de service lorsqu'un tel monnayeur vient à dysfonctionner.

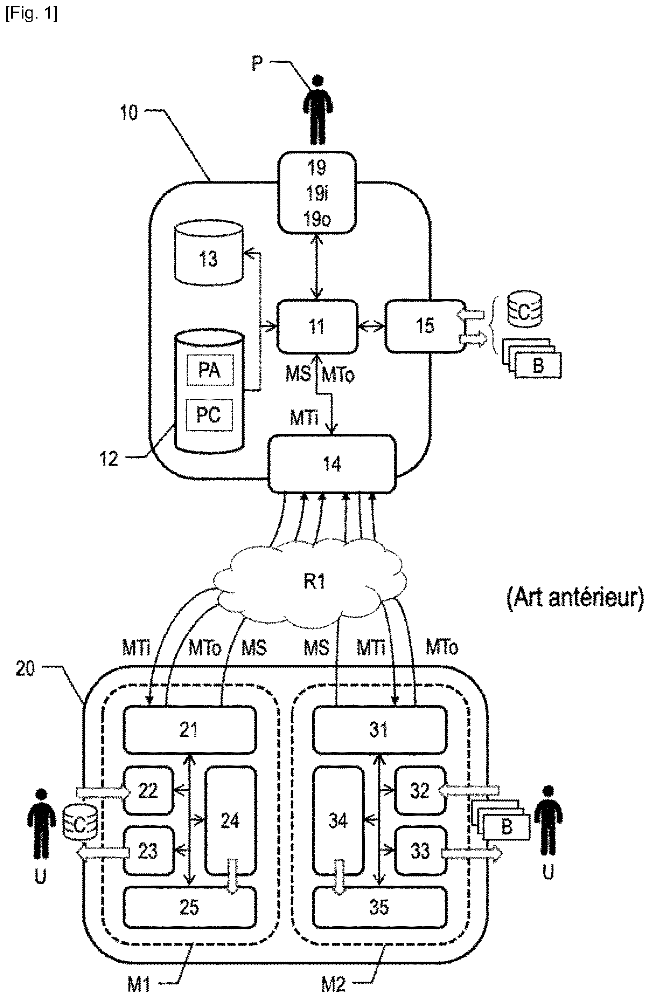

Comme l'indique la figure 1, un système d'encaissement s'appuie principalement sur une caisse enregistreuse. De nos jours, une telle caisse enregistreuse est dite « électronique » car elle consiste d'une manière générale en un programme d'ordinateur d'application d'encaissement PA dont les instructions de programme, préalablement chargées dans une mémoire de programmes 12, sont agencées pour être exécutées ou interprétées par une unité de traitement 11 d'un ordinateur 10. Généralement, une telle unité de traitement 11 comporte un ou plusieurs microprocesseurs ou microcontrôleurs et coopère avec une mémoire de données 13 pour enregistrer toutes données nécessaires à son fonctionnement ou à des fins d'historique. Il existe ainsi majoritairement des caisses enregistreuses électroniques dotées d'une interface homme-machine d'entrée 19i, telle qu'un clavier par exemple, d'une interface homme-machine de sortie 19o, telle qu'un écran, voire un double écran, pour que d'une part un utilisateur de ladite caisse, que nous appellerons par la suite « caissier », puisse visualiser les articles ou services qui font l'objet d'une transaction et que d'autre part le client puisse consulter le montant financier dont il doit s'acquitter pour confirmer un achat d'articles ou de prestations de service. Parfois les deux interfaces homme-machine d'entrée 19i et de sortie 19o peuvent ne constituer qu'une seule et même entité physique 19 lorsque celle-ci est un écran ou une dalle tactile. Un client U peut payer le prestataire ou le commerçant, via le caissier P en numéraire ou au moyen d'une monnaie électronique, par exemple en utilisant une carte bancaire. Une caisse enregistreuse électronique exploite pour cela différents périphériques d'encaissement parmi lesquels, un tiroir-caisse 15, un lecteur de cartes bancaires (non représenté sur la figure 1), un monnayeur 20, via des moyens ou liaisons de communication R1 filaires ou sans fil.

La traçabilité et la sécurité des opérations nécessitant un échange d'argent sous la forme d'espèces, c'est-à-dire en billets de banque B et/ou en pièces de monnaie C, sont particulièrement sensibles pour un commerçant ou un prestataire de service P. Recourir à un monnayeur 20 apporte de nombreux avantages. Nous utiliserons par la suite le termes « espèces » pour désigner indistinctement des billets de banque et/ou des pièces de monnaie.

Parmi ces derniers, nous pouvons tout d'abord mentionner la sécurisation de la manipulation d'argent sur un point de vente. En effet, un tel dispositif 20 prévient tout type d'erreur de rendu de monnaie ou d'introduction de fausse monnaie ou de devises étrangères lorsque celles-ci ne sont pas acceptées, ledit monnayeur 20 étant apte à détecter des pièces de monnaie C et/ou des billets de banque B impropres ou faux. Un monnayeur 20 permet en outre de réduire toute manipulation directe par un caissier P de pièces de monnaie C ou de billets de banque B. Le risque de perte ou de vol d'espèces est ainsi réduit ou annulé. Lorsqu'un tel monnayeur 20 offre un service de suivi des encaissements au fil de l'eau, le gestionnaire du point de vente peut bénéficier d'une supervision de sa trésorerie en temps réel.

L'emploi d'un monnayeur 20 permet également de minimiser le temps d'attente en caisse lorsque des clients U sont nombreux. En effet, le monnayeur 20 est très rapide dans son action de rendu de monnaie. De cette manière, l'expérience ou la satisfaction des clients est décuplée.

Recourir à un monnayeur 20 est également synonyme d'hygiène, notamment lorsque le point de vente nécessite un contact direct du caissier P avec des denrées. Le fait qu'un caissier ou commerçant P n'ait pas besoin de manipuler manuellement des espèces, c'est-à-dire des pièces de monnaie C ou des billets de banque B, permet de réduire la propagation de bactéries ou virus véhiculées par lesdites espèces.

Enfin, opter pour un monnayeur 20 permet de prévenir des tentatives de cambriolage ou de braquage d'un point de vente. Les réceptacles des espèces B, C, collectées ou prêtes à être distribuées, sont physiquement sécurisés, contrairement à un tiroir-caisse 15 classique. Sans pour autant s'apparenter à un coffre-fort, un monnayeur peut en effet être ancré au sol, ou plus généralement scellé sur tout support adapté, comporter une ou plusieurs portes ou volets agencés pour ralentir l'exécution d'une action malfaisante.

La très grande majorité des monnayeurs 20 consiste en au moins une paire de modules M1, M2, respectivement dédiés à la collecte, opération ci-après nommée « acceptation », de billets de banque B et de pièces de monnaies C et au rendu, opération ci-après nommée « distribution » desdits billets de banque B et de pièces de monnaies C. Lorsque l'acceptation et la distribution d'espèces sont conjointement permises par un monnayeur, celui-ci est dit apte à recycler de telles devises. Rares sont les monnayeurs traitant uniquement de billets de banque ou de pièces de monnaie. Chaque module M1 ou M2 comporte une unité de traitement 21, 31 propre, c'est-à-dire un ou plusieurs microprocesseurs ou microcontrôleurs et des mémoires de données et/ou de programmes. Ladite unité de traitement 21, 31 est chargée de piloter des moyens de collecte 22, 32 d'espèces, de produire et de transmettre au monde extérieur des messages de traitement MTo sortants traduisant, au fil de l'eau, chaque montant en devise associé au billet B collecté, c'est-à-dire accepté, ou à la pièce de monnaie C collectée, c'est-à-dire acceptée. L'unité de traitement 21, 31 d'un module M1, M2 d'un monnayeur 20 pilote aussi un conteneur 24, 34 des espèces C, B acceptées, voire une « cash box », selon une terminologie anglo-saxonne, c'est-à-dire un deuxième conteneur 25, 35 destiné à collecter un surplus d'espèces au-delà d'un seuil prédéterminé, voire encore des espèces acceptables mais non distribuables. Ce deuxième conteneur 25, 35 peut être retiré, de sorte que son contenu soit déposé en banque et remplacé par un nouveau conteneur vide sans nuire au fonctionnement du monnayeur 20. L'unité de traitement 21, 31 pilote également des moyens 23, 33 de sortie ou de distribution d'espèces pour assurer le rendu de monnaie C, B. Ainsi, lorsqu'une caisse enregistreuse 10 coopérant avec ledit monnayeur 20 calcule un trop perçu, ladite unité de traitement 21, 31 du module M1, M2 concerné provoque un recyclage ou une distribution simple d'espèces, c'est-à-dire une restitution de billets de banque B et/ou de pièces de monnaie C au client U. Le premier conteneur 24, 34 au sein de chaque module M1, M2 d'un monnayeur 20 est ainsi généralement nommé « recycleur » car il alimente en espèces lesdits moyens de sortie 23, 33 du module M1, M2 concerné. On parle également de « recyclage » pour nommer l'opération visant à restituer des espèces préalablement acceptées, à un client à partir d'un réceptacle ou conteneur d'espèces ou plus généralement de « distribution » d'espèces.

L'unité de traitement 21, 31 d'un module M1, M2 d'un monnayeur 20 est également agencée pour produire et transmettre au monde extérieur, un ou des messages de situation MS caractérisant un état de fonctionnement courant dudit module M1, M2. Lorsqu'un défaut de fonctionnement survient, par exemple lors d'une insertion d'un billet de banque B ou d'un document impropre provoquant un bourrage des moyens de collecte 32, ou encore, lorsque réciproquement un bourrage survient au niveau des moyens de sortie 33 lors de la distribution d'un billet de banque B, un message de situation MS peut être élaboré par ladite unité de traitement 31 pour alerter la caisse enregistreuse. De la même manière, lorsqu'une panne électronique ou mécanique survient ou encore lorsqu'une telle panne résulte d'un débranchement d'un câble assurant la liaison R1, une telle panne peut être détectée par l'unité de traitement 21, 31 d'un des deux modules M1, M2. Ladite unité de traitement 21, 31 élabore un message de situation MS caractérisant ladite panne. Ce type de message de situation MS peut être simple, stipulant un défaut indifférencié du module M1, M2 concerné. Il peut être plus élaboré, c'est-à-dire encodant ou désignant un défaut particulier. Enfin, l'unité de traitement 21, 31 d'un module M1, M2 d'un monnayeur 20 est agencée pour décoder et traiter des messages de traitement entrants MTi, émanant par exemple d'une caisse enregistreuse 20. Un tel message de traitement entrant MTi peut correspondre à un ordre d'ouverture de dépôts dont l'interprétation par l'unité de traitement 21, 31 du module M1, M2 concerné provoque une activation ou un déverrouillage des moyens de collecte 22, 32 dudit module M1, M2 pour que ce dernier soit prêt à recueillir, c'est-à-dire à accepter des espèces C, B. En variante, un tel message de traitement entrant MTi peut traduire un ordre de fermeture des dépôts signifiant qu'un montant suffisant de monnaie a été accepté. Tout surplus de monnaie peut être ainsi automatiquement restitué à son propriétaire U dès qu'un tel ordre de fermeture des dépôts a été traité par les unités de traitement respectives 21, 31 des modules M1, M2. Cette situation peut survenir lorsqu'une pluralité de pièces de monnaie C est déversée par un client U et que la somme en espèces dépasse le montant attendu par la caisse enregistreuse 10. En variante, un module M1, M2 d'un monnayeur 20 peut demeurer « actif » c'est-à-dire apte à recueillir en permanence des espèces, la caisse enregistreuse 10 étant dispensée d'émettre des messages de traitement MTi d'ouverture de dépôts.

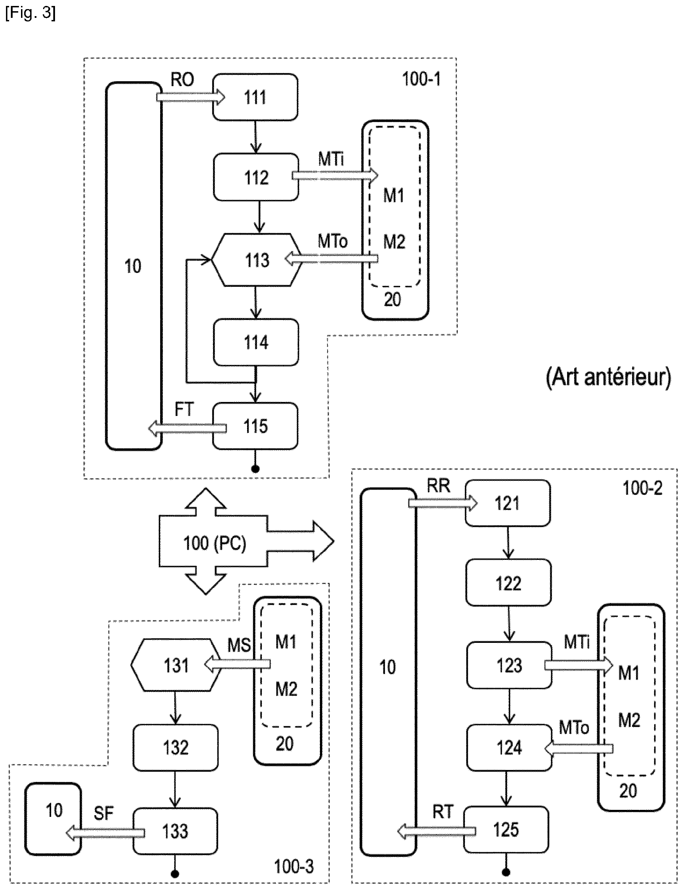

Un monnayeur 20 comportant généralement au moins deux modules respectivement destinés aux billets de banque B pour l'un d'entre eux M2, et aux pièces de monnaie C pour l'autre M1, un système d'encaissement comporte un élément concentrateur 14 agissant tel une passerelle entre les deux modules M1, M2 d'un monnayeur 20 d'une part et une caisse enregistreuse 10 d'autre part. Un tel élément concentrateur 14 peut être réalisé de manière logicielle et/ou matérielle. Lorsque cet élément concentrateur 14 résulte d'une exécution ou interprétation d'instructions d'un programme d'ordinateur PC, comme le décrit la figure 1, ce dernier s'apparente à un pilote ou « driver » selon une terminologie anglo-saxonne connue. Ledit pilote PC est alors généralement mis en œuvre par l'unité de traitement 11 de l'ordinateur 10 qui met également en œuvre le programme d'application d'encaissement PA. Ledit ordinateur remplit ou assure à la fois les fonctions ou rôles de caisse enregistreuse électronique 10 et d'élément concentrateur 14. Ce dernier est alors constitué par l'unité de traitement 11 lorsque cette dernière exécute ou interprète les instructions du programme PC, provoquant la mise en œuvre, par cette dernière, d'un procédé de pilotage 100 d'un monnayeur 20, dont un exemple d'organigramme fonctionnel est décrit à titre d'exemple par la figure 3. En variante, un tel élément concentrateur 14 peut être réalisé sous la forme d'une entité physique distincte de l'ordinateur 10 ou de la caisse enregistreuse, cette dernière coopérant avec ledit élément concentrateur 14 par toute liaison de communication adaptée. Par mesure de simplification, nous désignerons un élément concentrateur logiciel et/ou matériel par la référence 14. Le rôle principal de cet élément concentrateur 14 consiste, comme son nom l'indique, à agréger les messages sortants de traitement MTo ou de situation MS produits par les modules M1, M2 d'un monnayeur 20 pour les communiquer à une caisse électronique 10. Par ailleurs, ledit élément concentrateur 14 intercepte les messages de traitement entrants MTi, par exemple d'ouverture ou de fermeture de dépôts, émis par ladite caisse enregistreuse 10 à destination du monnayeur 20.

Selon l'état de l'art, dès que l'un des modules M1, M2 constituant un monnayeur 20 fait face à un défaut de fonctionnement, ledit élément concentrateur 14 alerte la caisse enregistreuse 10 que le monnayeur 20 est globalement défaillant, quand bien même l'un desdits modules M1, M2 demeure toujours en capacité d'accepter et/ou de distribuer des espèces C, B. Ce mode de fonctionnement « strict » se comprend parfaitement puisqu'il est impossible pour un caissier P de savoir si un client U dispose uniquement de pièces de monnaie C ou uniquement de billets de banque B. En l'absence d'un tiroir-caisse 15, ledit caissier P se retrouve dans l'impossibilité de maintenir un service d'encaissement et par voie de conséquence de satisfaire le besoin d'un client. Pour pallier cette difficulté, ledit commerçant ou prestataire se dote généralement d'un système d'encaissement comportant un mode d'encaissement alternatif, s'il n'en dispose pas d'ores et déjà d'un, par exemple un lecteur de cartes bancaires ou se résout à perçoir des chèques bancaires. Là encore, la clientèle ne disposant que d'espèces C, B sera particulièrement déçue de devoir renoncer à son achat. L'impact sur le chiffre d'affaires d'un tel dysfonctionnement partiel d'un monnayeur peut être significatif, le temps de réaction d'un prestataire de maintenance pour recouvrer l'exploitation dudit monnayeur ne pouvant être instantané.

De nouveau, pour tenter de pallier une telle situation, certains commerçants intègrent dans leur système d'encaissement une redondance de moyens d'encaissement en espèces C, B, par exemple en doublant le nombre de monnayeurs 20 au détriment des coûts d'acquisition et de maintenance de ces derniers. D'autres commerçants conservent un tiroir-caisse 15 pour accepter/restituer des espèces C, B, obérant en grande partie les avantages et objectifs recherchés en recourant à un monnayeur 20, en termes de sécurité, de traçabilité ou encore d'hygiène.

Des exemples de monnayeurs tels que mentionnés précédemment sont par exemple décrits dans les demandes de brevets US2009/0101723, US2018/0240311 ou encore US2018/0144320.

La demande de brevet EP 3 196 852 divulgue un monnayeur capable d'émettre un ticket d'avoir lorsque ledit monnayeur n'a pas la capacité de rendre l'intégralité de la monnaie. Un ticket d'avoir est émis avec le montant de monnaie non restitué au client. Ce dernier peut ensuite percevoir les espèces non encore restituées et mentionnées dans ledit ticket d'avoir auprès d'une machine dédiée agencée à cet effet. Ce type de solution nécessite l'ajout d'une machine supplémentaire pour compléter le rendu d'espèces, ce qui engendre un surcoût important pour les petits commerces et une expérience négative pour le client qui doit se rendre auprès de ladite machine supplémentaire, entrainant une perte de temps. En outre, ce type de solution n'adresse que le problème d'une restitution insuffisante d'espèces. Il n'apporte aucune solution dans le cas où le monnayeur n'aurait pas la capacité de percevoir tout ou partie du paiement du client lors de son achat.

L'invention permet de résoudre les limitations évoquées précédemment en proposant une solution visant à maintenir une continuité d'un service d'encaissement, c'est-à-dire d'acceptation et de distribution d'espèces C, B, alors qu'un monnayeur 20 d'un système d'encaissement est partiellement ou totalement défaillant, sans devoir recourir à une redondance de monnayeurs **ou à un tiroir-caisse** dont les entrées et/ou sorties de monnaie C, B ne sauraient être tracées.

Ainsi, l'invention propose une solution technique permettant de poursuivre une exploitation d'un monnayeur partiellement défaillant, de délivrer une aide à un caissier pour guider son action ou comportement lors d'un tel dysfonctionnement, de maintenir une excellente traçabilité des échanges de monnaie durant un fonctionnement dégradé dudit monnayeur.

A cette fin, l'invention concerne un procédé de pilotage d'un monnayeur, ledit procédé étant mis en œuvre par un élément concentrateur en lien avec une caisse enregistreuse électronique coopérant via une première liaison de communication avec deux modules dudit monnayeur respectivement pour accepter et/ou distribuer des espèces, ledit procédé comportant :
- un premier traitement comprenant :
   ∘une étape de décodage d'un ou plusieurs messages de traitement émis par les modules dudit monnayeur à destination dudit élément concentrateur, un tel message de traitement caractérisant des espèces acceptées par l'un desdits modules ;
   ∘ une étape de comptabilisation desdites espèces acceptées à partir desdits messages de traitement décodés ;
   ∘ une étape d'élaboration et de transmission à la caisse enregistreuse électronique d'un total d'espèces acceptées ainsi comptabilisées ;
- un deuxième traitement comprenant une étape de décodage et d'interprétation d'un message de situation émis par l'un des modules dudit monnayeur, ledit message caractérisant un état de fonctionnement courant dudit module ;
- un troisième traitement comprenant une étape de décodage et d'interprétation d'un message de situation émis par l'un des modules dudit monnayeur, ledit message caractérisant un état de fonctionnement courant dudit module.

Pour poursuivre une exploitation d'un monnayeur partiellement défaillant dans sa tâche de restitution d'un trop perçu en espèces et tracer la perception manuelle d'espèces par un caissier :
- le troisième traitement comporte une étape d'activation d'un objet électronique communiquant avec ledit élément concentrateur, agencé pour comporter une interface graphique exploitable par un humain de sorte que ce dernier saisisse un montant d'espèces acceptées manuellement et pour émettre, à destination dudit élément concentrateur, un message de traitement caractérisant lesdites espèces acceptées manuellement à l'instar des messages de traitement émis par les modules dudit monnayeur, ladite étape consistant en l'élaboration d'un message d'activation et en le déclenchement de l'émission dudit message d'activation à destination dudit objet électronique lorsque l'étape d'interprétation dudit état de fonctionnement courant d'un des modules du monnayeur atteste d'un dysfonctionnement de celui-ci ;
- l'étape du premier traitement de décodage d'un ou plusieurs messages de traitement émis par l'un des modules dudit monnayeur est agencée pour décoder en outre un message de traitement émis par ledit objet électronique caractérisant des espèces acceptées manuellement ;
- l'étape de comptabilisation desdites espèces acceptées est agencée pour comptabiliser également les espèces acceptées manuellement à partir d'un tel message de traitement émis par l'objet électronique.

Pour poursuivre une exploitation d'un monnayeur partiellement défaillant dans sa tâche de collecte d'espèces et tracer une distribution manuelle d'espèces par un caissier, l'objet électronique communiquant avec ledit élément concentrateur peut en outre être agencé pour comporter une interface graphique exploitable par un humain de sorte à autoriser et renseigner ce dernier à distribuer manuellement un montant en espèces, en réponse au décodage d'un message de traitement encodant ledit montant en espèces à distribuer manuellement. Le deuxième traitement tel procédé de pilotage d'un monnayeur peut comporter une étape de détermination, à partir dudit montant total en espèces à distribuer, des montants en espèces à distribuer adaptés aux capacités de distribution des modules du monnayeur et de l'objet électronique lorsque celui-ci est activé, d'élaboration de messages de traitement encodant respectivement lesdits montants en espèces à distribuer adaptés aux capacités de distribution desdits modules et dudit objet électronique activé et de transmission à ces derniers desdits messages de traitement.

Pour alerter le caissier qu'il doit exploiter l'objet électronique pour pallier un dysfonctionnement d'un module de monnayeur, le troisième traitement peut comporter une étape d'activation d'un dispositif d'alerte communicant avec ledit élément concentrateur et pour produire une information sonore, lumineuse et/ou vibratoire perceptible par un humain à portée de perception de ladite information, ladite étape consistant en l'élaboration d'un message d'alerte et en le déclenchement de l'émission dudit message d'alerte à destination dudit dispositif d'alerte lorsque l'étape pour interpréter l'état de fonctionnement courant d'un des modules du monnayeur atteste d'un dysfonctionnement de celui-ci.

Pour limiter l'emploi de l'objet électronique au seuls cas de dysfonctionnement d'un module du monnayeur, l'étape du premier traitement de décodage d'un message de traitement émis par ledit objet électronique caractérisant des espèces acceptées manuellement peut n'être mise en œuvre que si la valeur courante d'un sémaphore enregistrée dans une mémoire de données de l'élément concentrateur est égale à une valeur prédéterminée caractérisant une défaillance détectée d'un module du monnayeur.

De la même manière, les étapes d'élaboration et de transmission d'un message de traitement à destination de l'objet électronique peuvent n'être mises en œuvre que si la valeur courante d'un sémaphore enregistrée dans une mémoire de données de l'élément concentrateur est égale à une valeur prédéterminée caractérisant une défaillance détectée d'un module du monnayeur.

Selon ces modes de réalisation limitant l'exploitation de l'objet électronique, l'étape du troisième traitement d'activation de l'objet électronique peut consister en outre à mettre à jour, dans la mémoire de données, la valeur courante du sémaphore pour que celle-ci soit égale à la valeur prédéterminée caractérisant une défaillance détectée d'un module du monnayeur.

Pour constituer un élément concentrateur, l'invention concerne en outre un produit programme d'ordinateur comportant des instructions de programme, qui lorsqu'elles sont inscrites dans la mémoire de programmes d'un ordinateur et interprétées ou exécutées par une unité de traitement de ce dernier, provoquent la mise en œuvre d'un procédé de pilotage d'un monnayeur tel qu'évoqué précédemment.

L'invention concerne en outre un système d'encaissement comportant une caisse enregistreuse électronique résultant avantageusement d'une exécution ou interprétation par une unité de traitement d'instructions d'un programme d'application d'encaissement préalablement enregistrées dans une mémoire de programmes d'un ordinateur, un monnayeur comprenant des modules d'acceptation et/ou de distribution d'espèces, un élément concentrateur de messages de traitement ou de situation émanant ou à destination desdits modules du monnayeur, un objet électronique communicant avec ledit élément concentrateur et agencé pour suppléer un module du monnayeur défaillant, ledit système étant agencé pour mettre en œuvre un procédé de pilotage du monnayeur conformément à l'invention.

Pour faciliter le déploiement de la solution, l'élément concentrateur d'un tel système peut résulter d'une exécution ou interprétation par l'unité de traitement d'instructions d'un produit programme d'ordinateur tel qu'énoncé ci-dessus, lesdites instructions étant préalablement enregistrées dans la mémoire de programmes de l'ordinateur mettant en œuvre les instructions du programme d'application d'encaissement.

D'autres caractéristiques et avantages apparaîtront plus clairement à la lecture de la description qui suit et à l'examen des figures qui l'accompagnent parmi lesquelles :
- la figure 1, d'ores et déjà décrite, illustre un système d'encaissement connu ;
- la figure 2 présente un exemple d'un système d'encaissement selon l'invention ;
- la figure 3 illustre un procédé connu de pilotage d'un monnayeur ;
- la figure 4 illustre un procédé de pilotage d'un monnayeur selon l'invention ;
- la figure 5 décrit un schéma synoptique d'échanges entre différents éléments d'un système d'encaissement selon l'invention.

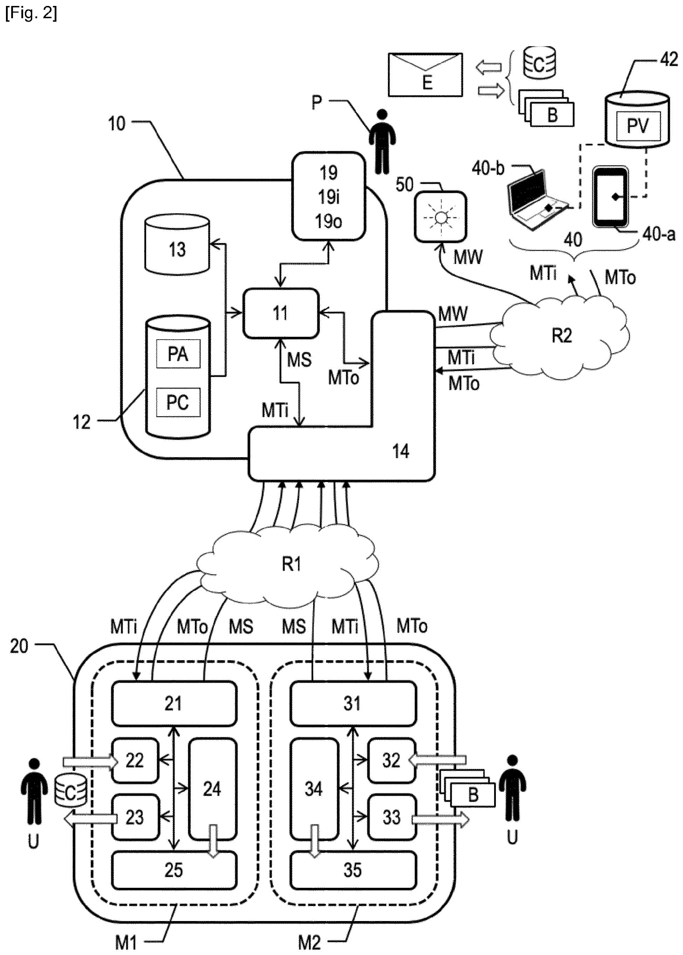

La figure 2 présente un exemple non limitatif d'architecture d'un système d'encaissement conforme à l'invention. Un tel système comporte des éléments similaires à ceux précédemment décrits en lien avec la figure 1. Ainsi, un tel système comporte une caisse enregistreuse électronique consistant avantageusement en un ordinateur 10 dont une unité de traitement 11, sous la forme d'un ou plusieurs microprocesseurs ou microcontrôleurs, interprète ou exécute des instructions d'un programme d'application d'encaissement PA, préalablement enregistrées dans une mémoire de programmes 12 coopérant avec ladite unité de traitement 11. Une telle caisse enregistreuse électronique 10, résultant de l'exécution ou de l'interprétation des instructions du programme d'application d'encaissement PA, comporte une interface homme-machine d'entrée 19i, par exemple sous la forme d'un clavier d'ordinateur et une interface homme-machine de sortie 19o, sous la forme d'un ou plusieurs écrans d'ordinateur pour qu'un commerçant ou prestataire P et/ou un client U puissent consulter la contrepartie financière à l'achat d'un produit ou d'un service. De telles interfaces homme-machine d'entrée 19i et de sortie 19o peuvent ne constituer qu'une seule entité physique 19, par exemple, un écran d'ordinateur tactile.

Selon la figure 2, une telle caisse enregistreuse électronique 10 coopère avec un monnayeur 20 via une liaison de communication R1 filaire ou sans fil. Ledit monnayeur 20 consiste en un monnayeur similaire, voire identique, au monnayeur 20 décrit en lien avec la figure 1. Il comporte deux modules M1, M2 intégrant chacun une unité de traitement 21, 31 sous la forme d'un ou plusieurs microprocesseurs ou microcontrôleurs associés à des mémoires de données et/ou de programmes. Chaque unité de traitement 21, 31 est chargée de piloter des moyens de collecte 22, 32 d'espèces C, B, de produire et transmettre au monde extérieur des messages de traitement MTo sortants traduisant, au fil de l'eau, chaque montant en devise associé à un billet B ou une pièce de monnaie C accepté(e). L'unité de traitement 21, 31 d'un module M1, M2 du monnayeur 20 pilote aussi un conteneur 24, 34 d'espèces C, B acceptées, voire une « cash box » 25, 35 pour collecter un surplus d'espèces au-delà d'un seuil prédéterminé. Chaque unité de traitement 21, 31 pilote également des moyens 23, 33 de sortie ou de distribution d'espèces pour assurer le rendu de monnaie C, B dans le cas d'un trop-perçu.

A l'instar de celle équipant chaque module M1, M2 du monnayeur 20 du système d'encaissement décrit en lien avec la figure 1, l'unité de traitement 21, 31 d'un module M1, M2 d'un monnayeur 20 selon la figure 2 est également agencée pour produire et transmettre au monde extérieur, un ou des messages de situation MS caractérisant un état de fonctionnement courant dudit module M1, M2. Lorsqu'un défaut de fonctionnement survient, un message de situation MS peut être élaboré par ladite unité de traitement 21 ou 31, ledit message MS caractérisant ladite panne. L'unité de traitement 21, 31 d'un module M1, M2 d'un tel monnayeur 20 est en outre agencée pour décoder et traiter des messages de traitement entrants MTi, émanant par exemple d'une caisse enregistreuse électronique 10, un tel message de traitement entrant MTi pouvant par exemple correspondre à un ordre d'ouverture de dépôts dont l'interprétation par l'unité de traitement 21, 31 du module M1, M2 concerné provoque une activation ou un déverrouillage des moyens de collecte 22, 32 dudit module M1, M2 pour que ce dernier soit prêt à recueillir, c'est-à-dire à accepter des espèces C, B. En variante, un tel message de traitement entrant MTi peut traduire un ordre de fermeture des dépôts signifiant qu'un montant suffisant de monnaie a été accepté. Comme évoqué précédemment en lien avec la figure 1, un module M1, M2 d'un monnayeur 20 peut demeurer « actif » c'est-à-dire apte à recueillir en permanence des espèces, la caisse enregistreuse électronique 10 étant dispensée d'émettre des messages de traitement MTi d'ouverture de dépôts.

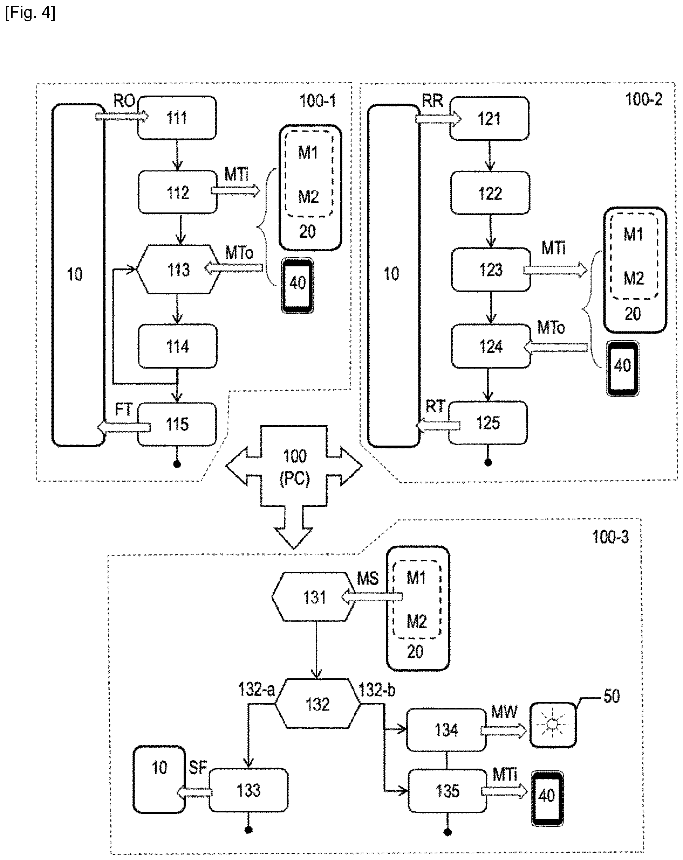

Les au moins deux modules M1, M2 du monnayeur 20, respectivement destinés aux billets de banque B et aux pièces de monnaie C, coopèrent avec la caisse enregistreuse électronique 10 via un élément concentrateur 14 agissant tel une passerelle entre lesdits deux modules M1, M2 du monnayeur 20 d'une part et la caisse enregistreuse électronique 10. A l'instar de celui dépeint en lien avec la figure 1, un tel élément concentrateur 14 peut être réalisé de manière logicielle et/ou matérielle. Lorsque cet élément concentrateur 14 résulte de l'exécution ou de l'interprétation d'instructions d'un programme PC par une unité de traitement 11 d'un ordinateur 10, comme le décrivent les figures 1 et 2, ce programme d'ordinateur PC s'apparente à un pilote ou un « driver » selon une terminologie anglo-saxonne connue. Ledit pilote PC est alors généralement mis en œuvre par l'unité de traitement 11 de l'ordinateur 10 qui met également en œuvre le programme d'application d'encaissement PA. Ledit ordinateur remplit ou assure à la fois les fonctions ou rôles de caisse enregistreuse électronique 10 et d'élément concentrateur 14. Ce dernier est alors constitué par l'unité de traitement 11 lorsque cette dernière exécute ou interprète les instructions du programme PC, provoquant la mise en œuvre, par cette dernière, d'un procédé de pilotage 100 d'un monnayeur 20, dont un exemple d'organigramme fonctionnel est décrit à titre d'exemple par la figure 4. En effet, ledit élément concentrateur 14 ou encore le produit programme d'ordinateur PC est adapté, au regard de celui de la figure 1, pour provoquer la mise en œuvre de l'invention. En variante, un tel élément concentrateur 14 peut être réalisé sous la forme d'une entité physique distincte de l'ordinateur ou de la caisse enregistreuse électronique 10, cette dernière coopérant avec ledit élément concentrateur 14 par toute liaison de communication adaptée. Par mesure de simplification, nous désignerons le concentrateur logiciel et/ou matériel par la référence 14. Le rôle de ce concentrateur 14 consiste, comme son nom l'indique, à agréger les messages de traitement MTo ou de situation MS produits par les modules M1, M2 d'un monnayeur 20 pour les communiquer à une caisse enregistreuse électronique 10. Par ailleurs, ledit élément concentrateur 14 intercepte les messages de traitement MTi, par exemple d'ouverture ou de fermeture de dépôts émis par ladite caisse enregistreuse électronique 10 au monnayeur 20.

Comme d'ores et déjà évoqué en lien avec l'état de l'art illustré par la figure 1, dès que l'un des modules M1, M2 constituant un monnayeur 20 fait face à un dysfonctionnement, ledit élément concentrateur 14 alerte la caisse enregistreuse électronique 10 que le monnayeur 20 est globalement défaillant, quand bien même l'un deux modules M1, M2 le constituant demeure toujours en capacité d'accepter ou de distribuer des espèces C, B. Ce mode de fonctionnement « strict » est très pénalisant. L'invention prévoit ainsi un mode de fonctionnement de l'élément concentrateur 14 différent de celui évoqué en lien avec la figure 3, permettant d'exploiter autant que possible les capacités restantes du monnayeur 20, sans que le programme d'application d'encaissement PA de la caisse enregistreuse électronique 10 ou ledit monnayeur 20 ne nécessite de modifications structurelles ou fonctionnelles.

Pour cela, un système d'encaissement selon l'invention comporte un premier élément additionnel 40, sous la forme d'un objet électronique communicant, tel qu'un téléphone mobile intelligent 40-a ou une tablette tactile, voire encore un ordinateur portable 40-b ou, plus généralement, tout objet apte à traduire une gestuelle d'un commerçant, prestataire ou caissier P en informations intelligibles par une unité de traitement 11 d'une caisse enregistreuse 10. Un tel objet électronique 40 communique avec la caisse enregistreuse 10, avantageusement électronique, au moyen de toute liaison R2 filaire ou sans fil. Selon un exemple de mise en œuvre préférée de l'invention, une liaison de communication sans fil, par exemple au moyen d'un protocole de communication de proximité de type Wi-Fi ou Bluetooth sera privilégié pour favoriser la mobilité et la disponibilité dudit caissier P.

L'invention prévoit qu'un tel objet électronique 40 comporte une application résidente PV, c'est-à-dire un programme d'ordinateur dont les instructions de programme, préalablement chargées dans une mémoire de programmes 42 dudit objet 40, sont interprétables ou exécutables par une unité de traitement sous la forme d'un ou plusieurs microprocesseurs ou microcontrôleurs, dudit objet électronique 40. Ledit programme PV est agencé de sorte que ses instructions de programme, lors de leur interprétation ou exécution par ladite unité de traitement dudit objet électronique 40, provoquent une mise en œuvre d'un procédé d'aide à la saisie d'un encaissement (ou acceptation) ou d'une remise (ou distribution) d'espèces C, B, sous la forme d'une interface graphique exploitable aisément par le caissier, prestataire ou commerçant P. A l'aide de ladite interface graphique, ce dernier peut saisir, en lieu et place d'un des modules M1, M2 défaillant du monnayeur 20, toute acceptation manuelle ou toute distribution manuelle d'une pièce de monnaie C ou d'un billet de banque B. Le programme d'ordinateur PV offre en quelque sorte une simulation d'un des modules M1, M2 dudit monnayeur défaillant 20 ou plus précisément une simulation de la gestion ou de l'élaboration de messages de traitement entrants MTi ou sortants MTo étudiés précédemment lorsqu'ils sont gérés ou élaborés par l'unité de traitement 31, 31 d'un module M1, M2 du monnayeur 20. On entend par « acceptation ou encaissement manuel » d'un numéraire ou d'une espèce C, B par un caissier P, toute opération consistant à recevoir en main propre un tel numéraire C, B de la part d'un client U pour le consigner dans un réceptacle idoine E symbolisé par une enveloppe sur la figure 2. On entend également par « distribution ou remise manuelle » d'un numéraire ou d'une espèce C, B par un caissier P à un client U, toute opération consistant à remettre en main propre un tel numéraire C, B audit client U, ledit numéraire étant préalablement prélevé depuis ledit réceptacle idoine E. Un tel réceptacle ou « fond de caisse » E peut être relativement faible au regard du contenu d'un tiroir-caisse conventionnel. Le montant total des espèces disponibles dans un tel réceptacle E sera dimensionné pour maintenir le service d'encaissement durant une opération de maintenance du monnayeur 20 pour que ce dernier recouvre ses pleines capacités. L'emploi de l'objet électronique 40, notamment de l'interface graphique découlant de la mise en œuvre du programme PV, permet de tracer précisément les entrées et sorties dudit réceptacle E. Ainsi, les billets de banque B et/ou pièces de monnaie C distribués ou acceptés sont identifiés et comptabilisés au fil de l'eau, comme le ferait un module de monnayeur. De tels échanges d'espèces sont horodatés et se traduisent par des messages de traitement sortants MTo similaires à ceux qu'aurait délivrés le module M1, M2 défaillant si ce dernier était en parfait état de fonctionnement. L'élément concentrateur 14 adapté selon l'invention est ainsi agencé pour piloter ledit objet électronique 40 lorsque ce dernier met en œuvre le programme d'ordinateur PV à l'instar d'un module M1, M2 d'un monnayeur 20. Selon un mode de réalisation alternatif, ledit programme PV peut être mis en œuvre par l'unité de traitement 11 de l'ordinateur 10 mettant en œuvre le logiciel applicatif PA. Dans ce cas les éléments 10 et 40 ne forment qu'une seule et même entité physique, le programme PV étant agencé pour être mis en œuvre par l'unité de traitement 11 après que ses instructions de programme aient été chargées dans la mémoire de programmes 12.

L'invention prévoit en outre qu'un système d'encaissement conforme à l'invention puisse comporter un dispositif d'alerte 50. Ce dernier a pour rôle d'attirer l'attention du caissier P en générant une alerte sonore, lumineuse ou haptique (vibratoire) ou plus généralement une information perceptible et distinguable par un humain à la condition que ledit caissier P soit à portée de perception d'une telle information. Le dispositif d'alerte 50 peut être actionné au moyen d'un message d'alerte MW émis par l'unité de traitement 11 sous l'impulsion du programme d'ordinateur PC ou plus généralement par l'élément concentrateur 14. Ledit caissier P sait alors qu'un problème concerne un monnayeur 20 et qu'il doit avoir recours à l'objet électronique 40 de manière supplétive. L'invention prévoit toutefois que lesdits éléments 40 et 50 puissent ne constituer qu'une seule et même entité physique.

Pour déclencher l'exploitation supplétive de l'objet électronique 40 en réaction à la défaillance partielle d'un monnayeur 20, l'élément concentrateur 14 est agencé pour traduire un message de situation MS caractérisant un état de dysfonctionnement d'un module M1, M2, ledit message de situation MS étant émis par ce dernier en une action alternative à l'élaboration d'une alerte d'interruption totale du fonctionnement du monnayeur 20 à destination de la caisse électronique 10, selon l'état de l'art. Ledit élément concentrateur 14 est ainsi agencé pour provoquer l'exploitation de l'objet électronique 40 en lieu et place du module M1, M2 défaillant et pour agréger des messages de transmission MTo émanant d'un module fonctionnel du monnayer 20 et dudit objet électronique 40 supplantant le module défaillant, à l'unité de traitement 11 mettant en œuvre le logiciel ou le programme d'application d'encaissement PA. Pour ledit programme d'application d'encaissement PA, « tout se passe » comme si ledit monnayeur 20 fonctionnait intégralement et normalement.

Réciproquement, pour mettre en œuvre une distribution d'espèces en cas d'un trop-perçu, l'élément concentrateur 14 est agencé pour adresser des messages de traitement entrants MTi à destination du module M1, M2 du monnayeur 20 demeurant fonctionnel et/ou à l'objet électronique 40. De cette manière, des espèces seront automatiquement délivrées par ledit module fonctionnel, et/ou le commerçant, caissier ou prestataire P sera instruit par l'interface graphique provoquée par l'exécution du programme d'ordinateur PV par l'unité de traitement de l'objet électronique 40, que celui-ci doit prélever depuis le réceptacle E et remettre manuellement des espèces au client U.

Le service d'encaissement peut ainsi être parfaitement maintenu sans que soit pénalisée la clientèle U et sans induire les inconvénients des solutions alternatives connues, telles que l'utilisation d'un tiroir-caisse 15 évoquée en lien avec la figure 1.

La figure 3 présente sous la forme d'algorithmes fonctionnels des traitements 100-1, 100-2 et 100-3 mis en œuvre par un élément concentrateur connu, tel que l'élément 14 illustré par la figure 1. De tels traitements consistent en un procédé 100 mis en œuvre par unité de traitement d'un ordinateur, telle que l'unité de traitement 11 de l'ordinateur 10 mettant en œuvre un procédé d'encaissement sous l'impulsion d'instructions de programme PA préalablement inscrites dans une mémoire de programmes 12 dudit ordinateur 10. Comme évoqué précédemment, un tel élément concentrateur 14 peut résulter de la mise en œuvre provoquée du procédé 100 par l'interprétation ou l'exécution des instructions d'un deuxième programme d'ordinateur PC par ladite unité de traitement 11, lesdites instructions de programme PC étant également chargées dans ladite mémoire de programmes 12.

Un premier traitement 100-1, illustré par les étapes 111 à 115 sur la figure 3, consiste en la gestion de l'acceptation d'espèces par deux modules M1, M2 d'un monnayeur 20. Ainsi, une première étape optionnelle 111 peut consister en le décodage ou l'interprétation d'une commande ou requête RO émise par le programme d'application d'encaissement PA, ou plus familièrement par la caisse enregistreuse 10. Une telle requête RO peut consister en une ouverture de dépôts. En une étape 112, ladite requête RO est interprétée par l'élément concentrateur 14, en ce que ladite étape 112 consiste en l'élaboration et le déclenchement de la transmission d'un message de traitement entrant MTi à destination des modules M1, M2 d'un monnayeur 20 via une liaison de communication filaire ou sans fil, non représentée par mesure de simplification sur la figure 3. Un tel premier traitement 100-1 consiste alors en une étape 113 d'attente de la réception d'un ou plusieurs messages de traitement sortants MTo, émis par les modules M1, M2 dudit monnayeur 20, relatant les espèces acceptées sous des formes respectives de pièces de monnaie ou de billets de banques par lesdits modules M1, M2. Une étape 114 comptabilise, voire, enregistre dans une mémoire de données lesdits échanges d'espèces à des fins d'historique et de traçabilité. Les étapes 113 et 114 sont ainsi itérées tant que le flux de dépôt d'espèces se poursuit, puis une étape 115 consiste à consolider lesdits échanges et élaborer un total FT des espèces acceptées à destination de ladite caisse enregistreuse 10, soit plus précisément comme l'indique la figure 1, à l'unité de traitement 11 de l'ordinateur 10 mettant en œuvre le programme d'application d'encaissement PA, de sorte que ladite caisse enregistreuse puisse calculer un éventuel trop-perçu eu égard à une transaction d'achat de biens ou de services.

Un procédé 100 de pilotage d'un monnayeur mis en œuvre par un élément concentrateur 14 peut également consister en un deuxième traitement 100-2 illustré par les étapes 121 à 125 sur la figure 3, consistant à provoquer une distribution d'espèces par le monnayeur, dans le cas d'un trop-perçu. Un tel deuxième traitement 100-2 comporte une première étape 121 pour décoder ou interpréter une requête en distribution RR émise par la caisse enregistreuse 10, ladite requête RR véhiculant des données caractérisant un montant total en espèces à distribuer par le monnayeur 20 pour recouvrer le trop-perçu.

Un tel deuxième traitement 100-2 comporte alors une étape 122 pour traduire un tel montant total d'espèces à distribuer en messages de traitement entrants MTi et pour en provoquer la transmission à au moins l'un des modules M1, M2 du monnayeur 20 de sorte que le ou lesdits modules M1, M2 délivrent respectivement des pièces de monnaies et des billets de banques à un client pour recouvrer le trop-perçu. Pour élaborer de tels messages de traitement MTi, ladite étape 122 détermine préalablement à partir dudit montant total en espèces déduit de la requête RR un montant en espèces à distribuer adapté aux capacités de distribution de chaque module concerné. De tels montants en espèces à distribuer adaptés aux capacités respectives de plusieurs modules M1, M2 différents du monnayeur 20 peuvent être nuls, identiques ou différents. Une étape 124 peut consister à collecter, en réponse audits messages de traitement entrants MTi, des accusés-réception émanant des modules M1, M2, sous la forme de messages de traitement MTo sortants desdits modules.

Une étape 125 agrège et consolide lesdites informations déduites à l'étape 124 précédente sous la forme d'un total RT en espèces distribuées à destination de la caisse enregistreuse 10.

Enfin, un tel procédé 100 de pilotage d'un monnayeur 20 mis en œuvre par un élément concentrateur 14 connu peut consister en la gestion d'un défaut de fonctionnement du monnayeur 20. Un troisième traitement 100-3 consiste pour cela en des étapes 131 à 133 illustrées par la figure 3. Une première étape 131 consiste en l'espèce à décoder un message de situation MS émis par un module M1, M2 dudit monnayeur 20. Un tel message de situation MS caractérise un état de fonctionnement courant dudit module M1, M2. Lorsqu'un défaut de fonctionnement survient, par exemple lors d'une insertion d'un billet de banque ou d'un document impropre provoquant un bourrage des moyens de collecte ou encore lorsqu'une panne électronique ou mécanique survient, un message de situation MS peut être élaboré par l'unité de traitement dudit module. Une étape 132 permet alors de décoder et interpréter ledit message de situation MS, notamment si celui-ci est complexe, c'est-à-dire riche en termes d'informations en lien avec l'état de fonctionnement dudit module. Une étape 133 consiste alors à élaborer un statut SF intelligible pour la caisse enregistreuse 10, soit par le logiciel d'application PA mis en œuvre par l'ordinateur 10. Lorsqu'un tel message MS signale une défaillance, ne serait-ce que partielle, l'étape 133 pour élaborer un tel statut SF est agencée de sorte que ladite caisse électronique 10 considère que le monnayeur 20 n'est plus opérationnel.

La figure 4 présente, sous la forme d'algorithmes fonctionnels, des traitements 100-1, 100-2, 100-3 mis en œuvre par un élément concentrateur adapté selon l'invention, tel que l'élément concentrateur 14 illustré par la figure 2. De tels traitements 100-1, 100-2, 100-3 constituent un procédé de pilotage 100 mis en œuvre par unité de traitement d'un ordinateur, telle que l'unité de traitement 11 de l'ordinateur 10 mettant en œuvre un procédé d'encaissement sous l'impulsion d'instructions d'un programme d'application PA préalablement inscrites dans une mémoire de programmes 12 dudit ordinateur 10. Comme évoqué précédemment, un tel élément concentrateur 14 peut résulter de la mise en œuvre provoquée du procédé 100 par l'interprétation ou l'exécution d'instructions d'un deuxième programme d'ordinateur PC par ladite unité de traitement 11, lesdites instructions du programme PC étant également chargées dans ladite mémoire de programmes 12.

Un tel procédé 100 conforme à l'invention comporte des premier 100-1 et deuxième 100-2 traitements similaires aux premier 100-1 et deuxième 100-2 traitements du procédé 100 illustré par la figure 3. Ils correspondent ainsi respectivement à la gestion de l'acceptation d'espèces par deux modules M1, M2 d'un monnayeur 20 et à la gestion d'une distribution d'espèces par ledit monnayeur 20 en cas de trop-perçu.

Le premier traitement 100-1 du procédé 100 correspondant aux étapes 111 à 115 illustrées par la figure 4 diffère toutefois du traitement 100-1 décrit par la figure 3, en ce qu'il est agencé pour transmettre et recevoir des messages de traitement MTi, MTo non plus uniquement à destination ou depuis les modules M1, M2 d'un monnayeur 20 mais également à destination et depuis un objet électronique 40 exploité à titre supplétif en cas de défaillance d'un module M1, M2 dudit monnayeur 20. Un tel objet électronique 40 a d'ores et déjà été décrit en lien avec la figure 2. Il est agencé, par l'installation d'une application PV idoine, pour simuler le fonctionnement d'un module de monnayeur. Ainsi comme illustré par la figure 2, lors d'une défaillance d'un des modules M1, M2 d'un monnayeur 20, un caissier, prestataire ou commerçant P peut accepter manuellement des espèces d'un client U, ledit caissier P pouvant saisir à l'aide d'une interface graphique adaptée et d'une interface homme-machine d'entrée les pièces de monnaie ou les billets de banques perçus et déposés dans un réceptacle E. Ainsi, à l'instar d'un module de monnayeur, ledit objet électronique 40 peut élaborer et transmettre à destination de l'élément concentrateur 14 un ou des messages de traitement MTo précisant les espèces acceptées manuellement par le caissier P. L'invention prévoit en outre que l'étape 112 du premier traitement 100-1 du procédé 100 illustré par la figure 4 puisse élaborer et provoquer la transmission à destination dudit objet électronique 40 un message de traitement MTi d'ouverture de dépôts ou d'autorisation d'acceptation d'espèces. Un tel message de transmission MTi pourra avantageusement être interprété par l'objet électronique 40 comme un préalable à un déverrouillage logique de l'interface homme machine d'entrée pour saisir des espèces acceptées manuellement. L'invention prévoit en outre un mode de réalisation préféré selon lequel la mise en œuvre de l'étape 113, pour prendre en compte un message de traitement MTo émanant dudit objet électronique 40, soit réalisée ou non selon la valeur courante d'un indicateur booléen ou sémaphore enregistrée dans une mémoire de données de l'élément concentrateur 14, par exemple la mémoire 13 de l'ordinateur 10 mettant en œuvre les instructions du programme PC selon la figure 2. Comme nous le décrirons plus loin, un tel sémaphore pourra prendre des première et deuxième valeurs prédéterminées caractérisant respectivement la détection ou l'absence de détection d'une défaillance actuelle d'un module de monnayeur. L'étape 113, pour prendre en compte un message de traitement MTo émanant dudit objet électronique 40, pourra n'être mise en œuvre que si la valeur courante dudit sémaphore est égale à la valeur prédéterminée caractérisant une défaillance détectée d'un module du monnayeur. Les étapes 111, 114 et 115 demeurent respectivement similaires, voire identiques aux étapes 111, 114 et 115 décrites en lien avec le traitement 100-1 du procédé 100 illustré par la figure 3. Tout message de traitement MTo émanant d'un module M1, M2 du monnayeur ou de l'objet électronique 40, décodé à l'étape 113, peut faire l'objet d'une historisation dans une mémoire de données accessible par l'élément concentrateur 14, en l'espèce dans l'exemple de réalisation avantageux décrit en lien avec la figure 2, la mémoire de données 13 de l'ordinateur 10 dont l'unité de traitement 11 interprète ou exécute les instructions du programme PC, provoquant la mise en œuvre du procédé 100 de pilotage d'un monnayeur 20.

Le deuxième traitement 100-2 du procédé 100 correspond aux étapes 121 à 125 illustrées par la figure 4. Il diffère toutefois du traitement 100-2 décrit par la figure 3, en ce qu'il est agencé pour transmettre et recevoir des messages de traitement MTi, MTo, non plus uniquement à destination ou depuis les modules M1, M2 d'un monnayeur 20 mais également à destination et depuis un objet électronique 40 exploité à titre supplétif en cas de défaillance d'un module M1, M2 dudit monnayeur. Un tel objet électronique 40 a d'ores et déjà été décrit en lien avec la figure 2. Il est agencé, par l'installation d'une application PV idoine, pour simuler le fonctionnement d'un module de monnayeur. Ainsi comme illustré par la figure 2, lors d'une défaillance d'un des modules M1, M2 d'un monnayeur 20, un caissier, prestataire ou commerçant P peut remettre manuellement en main propre des espèces à un client U, notamment en cas de trop-perçu. Ledit caissier, prestataire ou commerçant P peut saisir à l'aide d'une interface graphique idoine et d'une interface homme-machine d'entrée les pièces de monnaie ou les billets de banques prélevés depuis un réceptacle E et remis au client. Ainsi, à l'instar d'un module de monnayeur, ledit objet électronique 40 peut élaborer et transmettre à destination de l'élément concentrateur 14 un ou des messages de traitement sortants MTo précisant les espèces distribuées manuellement par le caissier P. L'invention prévoit en outre que l'étape 123 du deuxième traitement 100-2 du procédé 100 illustré par la figure 4 puisse élaborer et provoquer la transmission à destination dudit objet électronique 40 un message de traitement entrant MTi d'autorisation de distribution manuelle d'espèces. Un tel message de traitement entrant MTi pourra avantageusement être interprété par l'objet électronique 40 comme un préalable à un déverrouillage logique de l'interface homme-machine d'entrée et/ou de l'interface graphique pour saisir des espèces prélevées. L'invention prévoit en outre un mode de réalisation préféré selon lequel la mise en œuvre de l'étape 124, pour prendre en compte un message de traitement sortant MTo émanant dudit objet électronique 40, soit réalisée ou non selon la valeur courante d'un indicateur booléen ou sémaphore enregistrée dans une mémoire de données de l'élément concentrateur 14, par exemple la mémoire 13 de l'ordinateur 10 mettant en œuvre les instructions du programme PC selon la figure 2. Comme nous le décrirons plus loin, un tel sémaphore pourra prendre des première et deuxième valeurs prédéterminées caractérisant respectivement la détection ou l'absence de détection d'une défaillance actuelle d'un module de monnayeur. L'étape 124, pour prendre en compte un message de traitement sortant MTo émanant dudit objet électronique 40, pourra n'être mise en œuvre que si la valeur courante dudit sémaphore est égale à la valeur prédéterminée caractérisant une défaillance détectée d'un module du monnayeur. Les étapes 121, 122 et 125 demeurent respectivement similaires, voire identiques aux étapes 121, 122 et 125 décrites en lien avec le traitement 100-2 du procédé 100 illustré par la figure 3. Tout message de traitement sortant MTo émanant d'un module M1, M2 du monnayeur ou de l'objet électronique 40, décodé à l'étape 124, peut faire l'objet d'une historisation dans une mémoire de données accessible par l'élément concentrateur 14, en l'espèce dans l'exemple de réalisation avantageux décrit en lien avec la figure 2, la mémoire de données 13 de l'ordinateur 10 dont l'unité de traitement 11 interprète ou exécute les instructions du programme PC provoquant la mise en œuvre du procédé 100.

Outre les adaptations des traitements 100-1 et 100-2 du procédé de pilotage 100 précédemment évoqués, ledit procédé 100 conforme à l'invention se distingue de l'état de l'art en ce qu'il comporte un traitement 100-3 d'une défaillance partielle d'un monnayeur permettant un maintien d'un service d'encaissements maîtrisé. Un tel troisième traitement 100-3 comporte des étapes 131, 132 et 133 similaires à celles décrites en lien avec le traitement 100-3 décrit par la figure 3 pour respectivement décoder, traduire un message de situation MS émis depuis un module M1, M2 d'un monnayeur 20, et informer la caisse enregistreuse 10 de l'état de fonctionnement courant dudit monnayeur. Lesdites étapes 131, 132 et 133 sont similaires à celles précédemment décrites lorsque ledit message de situation MS caractérise un état de fonctionnement normal dudit module M1, M2. Cette situation est symbolisée par le lien 132-a sur la figure 4. En revanche, lorsqu'un message de situation MS décodé à l'étape 131 caractérise un défaut de fonctionnement d'un des modules M1, M2 dudit monnayeur 20, situation symbolisée par le lien 132-b en figure 4, par exemple découlant d'une insertion d'un billet de banque ou d'un document impropre provoquant un bourrage des moyens de collecte ou encore d'une panne électronique ou mécanique, l'interprétation dudit message de situation MS réalisée à l'étape 132 est distincte de celle de l'état de l'art.

En effet, dans ce dernier cas, ladite étape 132 provoque la mise en œuvre de deux étapes successives ou concomitantes 134 et 135 en lieu et place d'une étape 133 selon l'état de l'art décrit par la figure 3, qui instruit la caisse enregistreuse 10 d'une interruption totale de l'exploitation du monnayeur. A contrario, l'invention permet de poursuivre une exploitation partielle dudit monnayeur 20, c'est-à-dire de tout module M1, M2 de ce dernier encore en parfait état de fonctionnement. Tout module défaillant ne sera plus sollicité par l'élément concentrateur 14, tant que le défaut persistera, au bénéfice de l'objet électronique 40 simulant le fonctionnement dudit module défaillant. Ainsi, le traitement 100-3 d'un procédé 100 comporte une étape 135 pour provoquer l'activation, par l'élaboration et le déclenchement d'une transmission d'un message de traitement entrant MTi adéquat, d'une application PV résidente au sein dudit objet électronique supplétif 40. Un tel message de traitement entrant MTi permet de paramétrer la mise en œuvre de l'application PV de sorte que celle-ci adapte son interface graphique et renseigne ledit commerçant, caissier ou prestataire P quant aux types d'espèces qu'il pourra accepter manuellement, soit des billets de banque B, compte tenu du fait que le module M1 dudit monnayeur 20 recyclant des pièces de monnaie demeure opérationnel. Pour alerter le commerçant, caissier ou prestataire P qu'il va devoir exploiter l'objet électronique 40, le traitement 100-3 comporte une étape 134 pour provoquer l'activation d'un dispositif d'alerte 50, ce dernier ayant pour rôle d'attirer l'attention dudit commerçant, caissier ou prestataire P à l'aide d'une information produite qui est perceptible par un humain, c'est-à-dire par exemple sonore, lumineuse ou haptique (vibratoire), lorsque ledit humain est situé à portée de perception de ladite information. Ladite étape 134 consiste pour cela à élaborer et à provoquer l'émission d'un message d'alerte MW à destination dudit dispositif d'alerte 50. Lorsque l'objet électronique 40 et le dispositif d'alerte 50 consistent en une même entité physique, lesdits messages de traitement entrant MTi et d'alerte MW peuvent également être confondus.

Pour mettre en œuvre un mode de réalisation préféré selon lequel la mise en œuvre de l'étape 113 ou 124, pour prendre en compte un message de traitement sortant MTo émanant dudit objet électronique 40, est réalisée ou non selon la valeur courante d'un indicateur booléen ou sémaphore enregistrée dans une mémoire de données de l'élément concentrateur 14, l'étape 135 peut en outre mettre à jour, par exemple dans la mémoire 13 de l'ordinateur 10 mettant en œuvre les instructions du programme PC selon la figure 2, ladite valeur courante dudit sémaphore pour que celle-ci caractérise la défaillance actuelle d'un module de monnayeur. Lors d'une reprise de service du module défaillant, se traduisant par l'émission d'un message subséquent de situation MS, l'étape 132 pourra réinitialiser ledit sémaphore pour que ce dernier caractérise une absence de défaillance.

Selon un mode de réalisation avantageux, ledit sémaphore pourra être dédoublé par module de monnayeur, pour préciser d'une part une défaillance des moyens de collecte d'un module donné et d'autre part les moyens de sortie dudit module donné. Ainsi, la condition pour prendre en compte un message de traitement sortant MTo émanant de l'objet électronique 40 pourra être plus précise et fine. Un tel message de traitement sortant MTo émanant de l'objet électronique 40 pourra être rejeté ou ignoré s'il caractérise une acceptation manuelle d'espèces, alors que seuls les moyens de restitution ou de sortie du module donné dysfonctionnement et réciproquement. Enfin, l'étape 112 ou 123 pourra être agencée pour tenir compte de la valeur courante d'un tel sémaphore pour solliciter ou non ledit objet électronique 40 en lieu et place d'un module du monnayeur.

Nous pouvons constater que lors de la « prise de conscience » à l'étape 132 d'une défaillance d'un module M1, M2 d'un monnayeur 20, la caisse enregistreuse 10 n'est pas informée d'une telle défaillance partielle. A contrario, grâce à la mise en œuvre des étapes 113 et 124, l'utilisation du réceptacle E pour accepter ou restituer manuellement des espèces, via l'exploitation de l'application PV de l'objet électronique 40, supplée la non-utilisation du module défaillant de manière « transparente » pour ladite caisse enregistreuse 10, plus précisément pour le programme d'application d'encaissement PA mis en œuvre par l'unité de traitement 11 mettant en œuvre ce dernier. Le ou les autres modules du monnayeur 20 encore en étant de bon fonctionnement, demeure(nt) toujours utilisé(s), limitant ainsi les opérations manuelles réalisées par le caissier, prestataire ou commerçant P pour percevoir ou restituer manuellement des espèces aux clients.

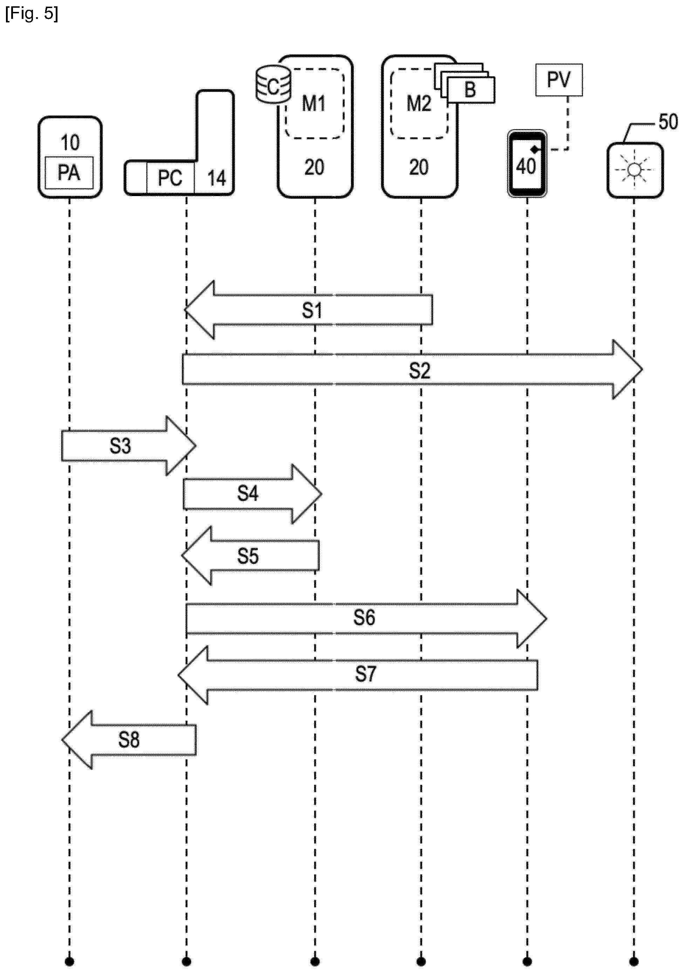

La figure 5 illustre les avantages conférés par la mise en œuvre de l'invention. Elle met en perspective l'exploitation des moyens décrits en lien avec la figure 2, soit le programme d'application d'encaissement PA de la caisse enregistreuse électronique 10, l'élément concentrateur 14 ou le programme d'ordinateur PC provoquant la mise en œuvre d'un procédé 100 de pilotage d'un monnayeur décrit en lien avec la figure 4, deux modules M1 et M2 d'un tel monnayeur 20, un objet électronique 40 suppléant la défaillance d'un module dudit monnayeur 20 et un dispositif d'alerte 50. Exploitons ladite figure 5 pour illustrer successivement deux situations, respectivement d'acceptation et de distribution d'espèces alors que le monnayeur chargé de percevoir ou de distribuer lesdites espèces se trouve partiellement défaillant.

Selon une première situation un client U se présente devant un caissier P et souhaite payer en espèces l'achat d'un bien ou d'un service.

La figure 5 décrit une première phase S1 initiée par le fait que les moyens de collecte de billets de banque B du module M2 du monnayeur 20 se mettent à dysfonctionner. L'unité de traitement dudit module M2 élabore un message de situation MS caractérisant la défaillance à destination de l'élément concentrateur 14. Ce dernier décode ledit message de situation MS par la mise en œuvre de l'étape 131 du procédé 100 décrit par la figure 4.

La figure 5 décrit alors une deuxième phase S2 durant laquelle, l'élément concentrateur 14 interprète, par la mise en œuvre de l'étape 132 (lien 132-b sur la figure 4), ledit message de situation MS comme une défaillance partielle du monnayeur, provoquant la mise en œuvre de l'étape 134 pour élaborer et transmettre un message d'alerte MW à destination du dispositif d'alerte 50. Le caissier P prenant en compte l'indication délivrée par ledit dispositif d'alerte 50 sait qu'il doit exploiter, à titre supplétif, l'objet électronique 40 et le réceptacle d'espèces E.

Un client U procède à l'achat d'un bien ou d'un service. Démarre alors une troisième phase S3 durant laquelle l'application d'encaissement PA de la caisse enregistreuse électronique 10 délivre une requête en ouverture RO des dépôts à destination de l'élément concentrateur 14, de sorte que ce dernier puisse demander un déverrouillage des moyens de collecte en espèces du monnayeur 20.

La phase S4 illustre ainsi le déclenchement de l'émission d'un message de transmission MTi, par la mise en œuvre de l'étape 112 du procédé 100 selon la figure 4, à destination du module M1 qui est en parfait état de fonctionnement dudit monnayeur 20. En une phase S5, le module M1, plus précisément son unité de traitement, élabore puis déclenche l'émission d'un message de transmission sortant MTo caractérisant au fil de l'eau l'acceptation de pièces de monnaies C.

Parallèlement à la phase S4, une phase S6 traduit l'initialisation d'une exploitation supplétive de l'objet électronique 40 mettant en œuvre une application PV de simulation d'un module de monnayeur, en lieu et place du module M2 défaillant du monnayeur 20. Ainsi, un message de transmission entrant MTi est élaboré par l'élément concentrateur 14, par la mise en œuvre des étapes 112 et/ou 135 du procédé 100 décrit par la figure 4, pour activer ledit objet électronique 40 et propager l'ouverture de dépôt autorisant le caissier P à percevoir manuellement des billets de banque de la part de son client. Ledit caissier saisit les espèces perçues en main propre via l'interface homme-machine d'entrée mise à sa disposition sur l'objet électronique 40. Ce dernier élabore et transmet en réponse, en une phase S7, un ou des messages de transmission sortants MTo à destination de l'élément concentrateur 14 qui le ou les prend en considération par la mise en œuvre d'une étape 113 du procédé 100 décrit par la figure 4.

Enfin, la phase S8 illustrée par la figure 5 englobe une mise en œuvre, par ledit élément concentrateur 14, des étapes 113, 114 et 115 dudit procédé 100, pour traiter les différents messages de transmission sortants MTo émanant du module M1 et/ou de l'objet électronique 40 caractérisant les espèces perçues manuellement, établir le montant total en espèces perçues et transmettre ledit total FT à la caisse enregistreuse 10.

Les huit phases S1 à S8 décrites sur la figure 5 permettent en outre d'illustrer la mise en œuvre de l'invention selon une deuxième situation selon laquelle ladite caisse enregistreuse 10, plus précisément le programme d'ordinateur PA mis en œuvre par l'ordinateur 10, a déterminé un trop-perçu.

Ainsi, alors qu'une distribution d'espèces s'impose, les phases S1 et S2 présentées par la figure 5 décrivent, à l'instar de la situation précédente, la détection d'une défaillance du module M2 traitant les billets de banque du monnayeur 20. En une première phase S1, les moyens de sortie ou de restitution de billets de banque B du module M2 du monnayeur 20 se mettent à dysfonctionner. L'unité de traitement dudit module M2 élabore un message de situation MS caractérisant cette défaillance à destination de l'élément concentrateur 14. Ce dernier, par la mise en œuvre de l'étape 131 du procédé 100 décode ledit message de situation MS.

Durant une deuxième phase S2, l'élément concentrateur 14 interprète, par la mise en œuvre de l'étape 132 (lien 132-b) du procédé 100 illustré par la figure 4, ledit message de situation MS comme une défaillance partielle du monnayeur 20, provoquant la mise en œuvre de l'étape 134 dudit procédé 100 pour élaborer et transmettre un message d'alerte MW à destination du dispositif d'alerte 50. Le caissier prenant en compte l'indication visuelle, sonore ou vibratoire délivrée par ledit dispositif d'alerte 50 sait qu'il va devoir exploiter l'objet électronique 40 et le réceptacle d'espèces E en lieu et place d'un module du monnayeur.

La caisse enregistreuse 10 ayant calculé un trop perçu, une requête RR en distribution d'espèces est adressée, en une phase S3, à l'élément concentrateur 14.

La phase S4 illustre le déclenchement de l'émission d'un message de transmission entrant MTi, par la mise en œuvre de l'étape 123 du procédé 100 décrit par la figure 4, à destination du module M1 en parfait état de fonctionnement dudit monnayeur 20. En une phase S5, le module M1, plus précisément son unité de traitement, élabore puis déclenche l'émission d'un message de transmission sortant MTo caractérisant la distribution de pièces de monnaie C.

Parallèlement à la phase S4, une phase S6 traduit l'initialisation d'une exploitation supplétive de l'objet électronique 40 mettant en œuvre une application PV d'émulation d'un module de monnayeur, en lieu et place du module M2 défaillant du monnayeur 20. Ainsi, un message de transmission entrant MTi est élaboré par l'élément concentrateur 14, par la mise en œuvre des étapes 123 et/ou 135 du procédé 100 décrit en lien avec la figure 4, et émis à destination de l'objet électronique 40 à la place du module M2 défaillant pour propager une demande de distribution de billets de banque. L'objet électronique 40 décode le message de transmission entrant et affiche sur son interface homme-machine un message graphique autorisant le caissier P à distribuer, c'est-à-dire délivrer manuellement, des billets de banque à son client. Ledit caissier saisit les espèces remises en main propre via l'interface homme-machine d'entrée mise à sa disposition par l'objet électronique 40. Ce dernier élabore et transmet en réponse, en une phase S7, un ou des messages de transmission sortants MTo à destination de l'élément concentrateur 14 attestant une telle distribution manuelle qui le ou les prend en considération par la mise en œuvre d'une étape 124 du procédé 100 décrit par la figure 4.

Enfin, la phase S8 illustrée par la figure 5 englobe une mise en œuvre par ledit élément concentrateur 14 des étapes 124 et 125 du procédé 100 décrit en lien avec la figure 4, pour traiter les différents messages de transmission sortants MTo émanant du module M1 et/ou de l'objet électronique 40 caractérisant les espèces distribuées automatiquement ou manuellement, établir le montant total en espèces distribuées et transmettre ledit total RT à la caisse enregistreuse 10.

Bien que la présente invention ait été décrite en référence à des exemples de réalisations spécifiques, notamment en lien avec les figures 2 et 4, ladite invention ne se limite pas auxdits modes de réalisation décrits. En conséquence, la description et les dessins doivent être considérés dans un sens illustratif et non limitatif.

## Revendications

1. Procédé (100) de pilotage d'un monnayeur (20), ledit procédé étant mis en œuvre par un élément concentrateur (14) en lien avec une caisse enregistreuse électronique (10) coopérant via une première liaison de communication (R1) avec deux modules (M1, M2) dudit monnayeur (20) respectivement pour accepter et/ou distribuer des espèces (C, B), ledit procédé (100) comportant :
- un premier traitement (100-1) de gestion d'une acceptation d'espèces (C, B) par l'un desdits modules (M1, M2) comprenant :
∘ une étape (113) de décodage d'un ou plusieurs messages de traitement (MTo) émis par les modules (M1, M2) dudit monnayeur (20) à destination dudit élément concentrateur (14), un tel message de traitement (MTo) caractérisant des espèces acceptées par l'un desdits modules (M1, M2) ;
∘ une étape (114) de comptabilisation (114) desdites espèces acceptées à partir desdits messages de traitement (MTo) décodés ;
∘ une étape (MTo) d'élaboration (115) et de transmission à la caisse enregistreuse électronique (10) d'un total (FT) d'espèces ainsi comptabilisées ;
- un deuxième traitement (100-2) comportant une étape (121) pour interpréter une requête en distribution (RR) émise par la caisse enregistreuse électronique (10), ladite requête (RR) véhiculant des données caractérisant un montant total en espèces à distribuer par le monnayeur (20) ;
- un troisième traitement (100-3) comprenant une étape de décodage (131) et d'interprétation (132) d'un message de situation (MS) émis par l'un des modules (M1, M2) dudit monnayeur (20), ledit message (MS) caractérisant un état de fonctionnement courant dudit module (M1, M2) ;
ledit procédé étant **caractérisé en ce que** :
- le troisième traitement (100-3) comporte une étape (135) d'activation d'un objet électronique communiquant (40) avec ledit élément concentrateur (14), agencé (PV) pour comporter une interface graphique exploitable par un humain de sorte que ce dernier saisisse un montant d'espèces acceptées manuellement et pour émettre, à destination dudit élément concentrateur (14), un message de traitement (MTo) caractérisant lesdites espèces acceptées manuellement à l'instar des messages de traitement (MTo) émis par les modules (M1, M2) dudit monnayeur (20), ladite étape (135) consistant en l'élaboration d'un message d'activation (MTi) et en le déclenchement de l'émission dudit message d'activation (MTi) à destination dudit objet électronique (40) lorsque (132-b) l'étape (132) d'interprétation dudit état de fonctionnement courant d'un des modules (M1, M2) du monnayeur atteste d'un dysfonctionnement de celui-ci ;
- l'étape (113) du premier traitement (100-1) de décodage d'un ou plusieurs messages de traitement (MTo) émis par l'un des modules (M1, M2) dudit monnayeur (20) est agencée pour décoder en outre un message de traitement (MTo) émis par ledit objet électronique (40) caractérisant des espèces acceptées manuellement ;
- l'étape (114) du premier traitement (100-1) de comptabilisation desdites espèces acceptées est agencée pour comptabiliser également les espèces acceptées manuellement à partir d'un tel message de traitement (MTo) émis par l'objet électronique (40) ;
- ledit deuxième traitement (100-2) comprenant, lorsque l'objet électronique communiquant (40) avec ledit élément concentrateur (14) est en outre agencé (PV) pour comporter une interface graphique exploitable par un humain de sorte à autoriser et renseigner ce dernier à distribuer manuellement un montant en espèces en réponse au décodage d'un message de traitement (MTi) encodant ledit montant en espèces à distribuer manuellement, une étape (122) de détermination, à partir du montant total en espèces à distribuer véhiculé par la requête en distribution (RR), des montants en espèces à distribuer adaptés aux capacités de distribution des modules du monnayeur (20) et de l'objet électronique (40) lorsque celui-ci est activé, d'élaboration (123) de messages de traitement (MTi) encodant respectivement lesdits montants en espèces à distribuer adaptés aux capacités de distribution desdits modules (M1, M2) et dudit objet électronique (40) activé et de transmission à ces derniers desdits messages de traitement (MTi).

2. Procédé (100) selon l'une quelconque des revendications précédentes, pour lequel le troisième traitement (100-3) comporte une étape (134) d'activation d'un dispositif d'alerte communicant (50) avec ledit élément concentrateur (14) et pour produire une information sonore, lumineuse et/ou vibratoire perceptible par un humain à portée de perception de ladite information, ladite étape (134) consistant en l'élaboration d'un message d'alerte (MW) et en le déclenchement de l'émission dudit message d'alerte (MW) à destination dudit dispositif d'alerte (50) lorsque (132-b) l'étape (132) pour interpréter l'état de fonctionnement courant d'un des modules (M1, M2) du monnayeur atteste d'un dysfonctionnement de celui-ci.

3. Procédé (100) selon l'une quelconque des revendications précédentes, pour lequel l'étape (113) l'étape de décodage d'un message de traitement (MTo) émis par l'objet électronique (40) caractérisant des espèces acceptées manuellement n'est mise en œuvre que si la valeur courante d'un sémaphore enregistrée dans une mémoire de données (13) de l'élément concentrateur (14) est égale à une valeur prédéterminée caractérisant une défaillance détectée d'un module du monnayeur.

4. Procédé (100) selon l'une quelconque des revendications précédentes, pour lequel les étapes (124) d'élaboration et de transmission d'un message de traitement (MTi) à destination de l'objet électronique (40) ne sont mises en œuvre que si la valeur courante d'un sémaphore enregistrée dans une mémoire de données (13) de l'élément concentrateur (14) est égale à une valeur prédéterminée caractérisant une défaillance détectée d'un module du monnayeur.

5. Procédé (100) selon la revendication 3 ou 4, pour lequel l'étape (135) du troisième traitement (100-3) d'activation de l'objet électronique (40) consiste en outre à mettre à jour, dans la mémoire de données (13), la valeur courante du sémaphore pour que celle-ci soit égale à la valeur prédéterminée caractérisant une défaillance détectée d'un module du monnayeur.

6. Produit programme d'ordinateur (PC) comportant des instructions de programme, qui lorsqu'elles sont inscrites dans la mémoire de programmes (12) d'un ordinateur (10), interprétées ou exécutées par une unité de traitement (11) de ce dernier, provoquent la mise en œuvre d'un procédé de pilotage d'un monnayeur (100) selon l'une quelconque des revendications précédentes.

7. Système d'encaissement comportant une caisse enregistreuse électronique résultant d'une exécution ou interprétation par une unité de traitement (11) d'instructions d'un programme d'application d'encaissement (PA) préalablement enregistrées dans une mémoire de programmes d'un ordinateur (10), un monnayeur (20) comprenant des modules (M1, M2) d'acceptation et/ou de distribution d'espèces (B, C), un élément concentrateur (14) de messages de traitement (MTo, MTi) ou de situation (MS) émanant ou à destination desdits modules du monnayeur (20), un objet électronique communiquant (40) avec ledit élément concentrateur (14) et agencé (PV) pour suppléer un module du monnayeur défaillant, ledit système étant **caractérisé en ce que** ledit élément concentrateur (14) est agencé pour mettre en œuvre un procédé (100) de pilotage du monnayeur (20) selon l'une quelconque des revendications 1 à 5.

8. Système selon la revendication précédente, pour lequel l'élément concentrateur (14) résulte d'une exécution ou interprétation par l'unité de traitement (11) d'instructions d'un produit programme d'ordinateur (PC) conforme à la revendication 6, lesdites instructions étant préalablement enregistrées dans la mémoire de programmes (12) de l'ordinateur (10) mettant en œuvre les instructions du programme d'application d'encaissement (PA).

## Patentansprüche

1. Verfahren (100) zum Steuern eines Bezahlautomaten (20), wobei das Verfahren durch ein Konzentratorelement (14) in Verbindung mit einer elektronischen Registrierkasse (10) implementiert wird, die über eine erste Kommunikationsverbindung (R1) mit zwei Modulen (M1, M2) des Bezahlautomaten (20) zusammenarbeitet, um jeweils Bargeld (C, B) anzunehmen und/oder abzugeben, wobei das Verfahren (100) aufweist:
- eine erste Verarbeitung (100-1) zum Verwalten einer Annahme von Bargeld (C, B) durch eines der Module (M1, M2), umfassend:
∘ einen Schritt (113) zum Decodieren einer oder mehrerer Verarbeitungsnachrichten (MTo), die von den Modulen (M1, M2) des Bezahlautomaten (20) an das Konzentratorelement (14) gesendet werden, wobei eine solche Verarbeitungsnachricht (MTo) Bargeld kennzeichnet, das von einem der Module (M1, M2) angenommen wurde;
∘ einen Schritt (114) zum Verbuchen (114) des angenommenen Bargelds aus den decodierten Verarbeitungsnachrichten (MTo);
∘ einen Schritt (MTo) zum Erstellen (115) und Übertragen eines so verbuchten Gesamtbetrags (FT) von Bargeld an die elektronische Registrierkasse (10);
- eine zweite Verarbeitung (100-2), die einen Schritt (121) zum Interpretieren einer von der elektronischen Registrierkasse (10) gesendeten Abgabeanforderung (RR) aufweist, wobei die Anforderung (RR) Daten übermittelt, die eine Gesamtsumme des von dem Bezahlautomaten (20) abzugebenden Bargelds kennzeichnen;
- eine dritte Verarbeitung (100-3), umfassend einen Schritt zum Decodieren (131) und Interpretieren (132) einer von einem der Module (M1, M2) des Bezahlautomaten (20) gesendeten Statusnachricht (MS), wobei die Nachricht (MS) einen aktuellen Betriebszustand des Moduls (M1, M2) kennzeichnet;
wobei das Verfahren **dadurch gekennzeichnet ist, dass**:
- die dritte Verarbeitung (100-3) einen Schritt (135) zum Aktivieren eines mit dem Konzentratorelement (14) kommunizierenden elektronischen Objekts (40) aufweist, das dazu ausgelegt (PV) ist, eine von einem Menschen verwendbare grafische Schnittstelle aufzuweisen, sodass dieser letztere eine manuell angenommene Summe von Bargeld ergreift, und eine Verarbeitungsnachricht (MTo) an das Konzentratorelement (14) zu senden, die das manuell angenommene Bargeld nach Art der von den Modulen (M1, M2) des Bezahlautomaten (20) gesendeten Verarbeitungsnachrichten (MTo) kennzeichnet, wobei der Schritt (135) aus dem Erstellen einer Aktivierungsnachricht (MTi) und dem Auslösen des Sendens der Aktivierungsnachricht (MTi) an das elektronische Objekt (40) besteht, wenn (132-b) der Schritt (132) zum Interpretieren des aktuellen Betriebszustands eines der Module (M1, M2) des Bezahlautomaten eine Betriebsstörung desselben bestätigt;
- der Schritt (113) der ersten Verarbeitung (100-1) zum Decodieren einer oder mehrerer Verarbeitungsnachrichten (MTo), die von einem der Module (M1, M2) des Bezahlautomaten (20) gesendet werden, dazu ausgelegt ist, ferner eine Verarbeitungsnachricht (MTo) zu decodieren, die von dem elektronischen Objekt (40) gesendet wird, die das manuell angenommene Bargeld kennzeichnet;
- der Schritt (114) der ersten Verarbeitung (100-1) zum Verbuchen des angenommenen Bargelds dazu ausgelegt ist, auch das manuell angenommene Bargeld aus einer solchen, von dem elektronischen Objekt (40) gesendeten Verarbeitungsnachricht (MTo) zu verbuchen;
- die zweite Verarbeitung (100-2) umfassend, wenn das mit dem Konzentratorelement (14) kommunizierende elektronische Objekt (40) ferner dazu ausgelegt (PV) ist, eine von einem Menschen verwendbare grafische Schnittstelle aufzuweisen, um diesen letzteren zu autorisieren und zu informieren, eine Bargeldsumme manuell abzugeben, als Reaktion auf das Decodieren einer Verarbeitungsnachricht (MTi), die die manuell abzugebende Bargeldsumme codiert, einen Schritt (122) zum Bestimmen, aus der durch die Abgabeanforderung (RR) übermittelten Gesamtsumme des abzugebenden Bargelds, von abzugebenden Bargeldsummen, die an die Abgabekapazitäten der Module des Bezahlautomaten (20) und des elektronischen Objekts (40) angepasst sind, wenn dieses aktiviert ist, zum Erstellen (123) von Verarbeitungsnachrichten (MTi), die jeweils die abzugebenden Bargeldsummen codieren, die an die Abgabekapazitäten der Module (M1, M2) und des aktivierten elektronischen Objekts (40) angepasst sind, und zum Übertragen der Verarbeitungsnachrichten (MTi) an letztere.

2. Verfahren (100) nach einem der vorstehenden Ansprüche, wobei die dritte Verarbeitung (100-3) einen Schritt (134) zum Aktivieren einer mit dem Konzentratorelement (14) kommunizierenden Warnvorrichtung (50) und zum Erzeugen von Ton-, Licht- und/oder Vibrationsinformationen aufweist, die von einem Menschen innerhalb des Wahrnehmungsbereichs dieser Informationen wahrnehmbar sind, wobei der Schritt (134) aus dem Erstellen einer Warnnachricht (MW) und dem Auslösen des Sendens der Warnnachricht (MW) an die Warnvorrichtung (50) besteht, wenn (132-b) der Schritt (132) zum Interpretieren des aktuellen Betriebszustands eines der Module (M1, M2) des Bezahlautomaten eine Fehlfunktion desselben bestätigt.

3. Verfahren (100) nach einem der vorstehenden Ansprüche, wobei der Schritt (113) der Schritt zum Decodieren einer von dem elektronischen Objekt (40) gesendeten Verarbeitungsnachricht (MTo), die manuell angenommenes Bargeld kennzeichnet, nur dann implementiert wird, wenn der aktuelle Wert eines in einem Datenspeicher (13) des Konzentratorelements (14) gespeicherten Semaphors gleich einem vorbestimmten Wert ist, der einen erkannten Fehler eines Moduls des Bezahlautomaten kennzeichnet.

4. Verfahren (100) nach einem der vorstehenden Ansprüche, wobei die Schritte (124) zum Erstellen und zum Übertragen einer Verarbeitungsnachricht (MTi) an das elektronische Objekt (40) nur dann implementiert werden, wenn der aktuelle Wert eines in einem Datenspeicher (13) des Konzentratorelements (14) gespeicherten Semaphors gleich einem vorbestimmten Wert ist, der einen erkannten Fehler eines Moduls des Bezahlautomaten kennzeichnet.

5. Verfahren (100) nach Anspruch 3 oder 4, wobei der Schritt (135) der dritten Verarbeitung (100-3) zum Aktivieren des elektronischen Objekts (40) ferner darin besteht, den aktuellen Wert des Semaphors in dem Datenspeicher (13) zu aktualisieren, sodass er gleich dem vorbestimmten Wert ist, der einen erkannten Fehler eines Moduls des Bezahlautomaten kennzeichnet.

6. Computerprogrammprodukt (PC), das Programmanweisungen aufweist, die, wenn sie in den Programmspeicher (12) eines Computers (10) geschrieben und von einer Verarbeitungseinheit (11) dieses letzteren interpretiert oder ausgeführt werden, das Implementieren eines Verfahrens zum Steuern eines Bezahlautomaten (100) nach einem der vorstehenden Ansprüche bewirken.

7. Kassensystem, aufweisend eine elektronische Registrierkasse, die aus dem Ausführen oder Interpretieren von Anweisungen eines zuvor in einem Programmspeicher eines Computers (10) gespeicherten Kassenanwendungsprogramms (PA) durch eine Verarbeitungseinheit (11) resultiert, einen Bezahlautomat (20), umfassend Module (M1, M2) zum Annehmen und/oder Abgeben von Bargeld (B, C), ein Konzentratorelement (14) von Verarbeitungsnachrichten (MTo, MTi) oder Statusnachrichten (MS), die von den Modulen des Bezahlautomaten (20) stammen oder für diese bestimmt sind, ein elektronisches Objekt (40), das mit dem Konzentratorelement (14) kommuniziert und dazu ausgelegt (PV) ist, ein fehlerhaftes Modul des Bezahlautomaten zu ersetzen, wobei das System **dadurch gekennzeichnet ist, dass** das Konzentratorelement (14) dazu ausgelegt ist, ein Verfahren (100) zum Steuern des Bezahlautomaten (20) nach einem der Ansprüche 1 bis 5 zu implementieren.

8. System nach dem vorstehenden Anspruch, wobei das Konzentratorelement (14) aus einem Ausführen oder Interpretieren von Anweisungen eines Computerprogrammprodukts (PC) nach Anspruch 6 durch die Verarbeitungseinheit (11) resultiert, wobei die Anweisungen zuvor in dem Programmspeicher (12) des Computers (10) gespeichert wurden, der die Anweisungen des Kassenanwendungsprogramms (PA) implementiert.

## Claims

1. Method (100) for controlling a money handling machine (20), said method being implemented by a concentrator element (14) linked to an electronic cash register (10) which cooperates, via a first communication link (R1), with two modules (M1, M2) of said money handling machine (20) respectively for accepting and/or dispensing cash (C, B), said method (100) comprising:
- a first processing operation (100-1) for managing an acceptance of cash (C, B) by one of said modules (M1, M2) comprising:
∘ a step (113) of decoding one or more processing messages (MTo) transmitted by the modules (M1, M2) of said money handling machine (20) to said concentrator element (14), such a processing message (MTo) characterizing cash accepted by one of said modules (M1, M2);
∘ a step (114) of counting (114) said accepted cash on the basis of said decoded processing messages (MTo);
∘ a step (MTo) of generating (115) and transmitting to the electronic cash register (10) a total (FT) of cash counted in this way;
- a second processing operation (100-2) comprising a step (121) for interpreting a dispensing request (RR) transmitted by the electronic cash register (10), said request (RR) conveying data characterizing a total amount of cash to be dispensed by the money handling machine (20);
- a third processing operation (100-3) comprising a step of decoding (131) and of interpreting (132) a status message (MS) transmitted by one of the modules (M1, M2) of said money handling machine (20), said message (MS) characterizing a current operating state of said module (M1, M2);
said method being **characterized in that:**
- the third processing operation (100-3) comprises a step (135) of activating an electronic object (40) communicating with said concentrator element (14), designed (PV) to comprise a graphical interface that is operable by a human so that said human inputs an amount of manually accepted cash, and to transmit, to said concentrator element (14), a processing message (MTo) characterizing said manually accepted cash in the manner of the processing messages (MTo) transmitted by the modules (M1, M2) of said money handling machine (20), said step (135) consisting in generating an activation message (MTi) and in triggering the transmission of said activation message (MTi) to said electronic object (40) when (132-b) the step (132) of interpreting said current operating state of one of the modules (M1, M2) of the money handling machines indicates a malfunction thereof;
- the step (113) of the first processing operation (100-1) of decoding one or more processing messages (MTo) transmitted by one of the modules (M1, M2) of said money handling machine (20) is designed to further decode a processing message (MTo) transmitted by said electronic object (40) characterizing manually accepted cash;
- the step (114) of the first processing operation (100-1) of counting said accepted cash is designed to also count the manually accepted cash on the basis of such a processing message (MTo) transmitted by the electronic object (40);
- said second processing operation (100-2) comprising, when the electronic object (40) communicating with said concentrator element (14) is further designed (PV) to comprise a graphical interface that is operable by a human so as to authorize and assist the human to manually dispense an amount of cash in response to the decoding of a processing message (MTi) encoding said amount of cash to be manually dispensed, a step (122) of determining, from the total amount of cash to be dispensed conveyed by the dispensing request (RR), the amounts of cash to be dispensed which are adapted to the dispensing capacities of the modules of the money handling machine (20) and of the electronic object (40) when the electronic object is activated, generating (123) processing messages (MTi) respectively encoding said amounts of cash to be dispensed which are adapted to the dispensing capacities of said modules (M1, M2) and of said activated electronic object (40), and transmitting said processing messages (MTi) thereto.

2. Method (100) according to any one of the preceding claims, wherein the third processing operation (100-3) comprises a step (134) of activating an alert device (50), communicating with said concentrator element (14), for producing sound, light and/or vibratory information perceptible to a human within perception range of said information, said step (134) consisting in generating an alert message (MW) and in triggering the transmission of said alert message (MW) to said alert device (50) when (132-b) the step (132) for interpreting the current operating state of one of the modules (M1, M2) of the money handling machine indicates a malfunction thereof.

3. Method (100) according to any one of the preceding claims, wherein the step (113) of decoding a processing message (MTo) transmitted by the electronic object (40) characterizing manually accepted cash is implemented only if the current value of a semaphore stored in a data memory (13) of the concentrator element (14) is equal to a predetermined value characterizing a detected failure of a module of the money handling machine.

4. Method (100) according to any one of the preceding claims, wherein the steps (124) of generating and transmitting a processing message (MTi) to the electronic object (40) are implemented only if the current value of a semaphore stored in a data memory (13) of the concentrator element (14) is equal to a predetermined value characterizing a detected failure of a module of the money handling machine.

5. Method (100) according to claim 3 or 4, wherein the step (135) of the third processing operation (100-3) of activating the electronic object (40) further consists in updating, in the data memory (13), the current value of the semaphore so that it is equal to the predetermined value characterizing a detected failure of a module of the money handling machine.

6. Computer program product (PC) comprising program instructions which, when written into the program memory (12) of a computer (10), and interpreted or executed by a processing unit (11) thereof, cause the implementation of a method for controlling a money handling machine (100) according to any one of the preceding claims.

7. Cash register system comprising an electronic cash register resulting from an execution or interpretation, by a processing unit (11), of instructions from a cash register application program (PA) previously stored in a program memory of a computer (10), a money handling machine (20) comprising modules (M1, M2) for accepting and/or dispensing cash (B, C), a concentrator element (14) for processing messages (MTo, MTi) or status messages (MS) coming from or going to said modules of the money handling machine (20), an electronic object (40) communicating with said concentrator element (14) and designed (PV) to replace a failing module of the money handling machine, said system being **characterized in that** said concentrator element (14) is designed to implement a method (100) for controlling the money handling machine (20) according to any one of claims 1 to 5.

8. System according to the preceding claim, wherein the concentrator element (14) results from an execution or interpretation, by the processing unit (11), of instructions from a computer program product (PC) according to claim 6, said instructions being previously stored in the program memory (12) of the computer (10) implementing the instructions from the cash register application program (PA).
